# EUROPEAN PATENT APPLICATION

(11) **EP 3 758 293 A1**
(43) Date of publication of application: **30.12.2020**
(21) Application number: 19774314.9
(22) Date of filing: 15.03.2019
(51) Int. Cl.: H04L 12/24, H04L 29/08

(54) **SERVICE UPGRADE MANAGEMENT METHOD, APPARATUS, AND STORAGE MEDIUM**

(30) Priority: 26.03.2018 CN 201810253849
(71) Applicant: HUAWEI TECHNOLOGIES CO., LTD., Shenzhen, Guangdong 518129 (CN)
(72) Inventor: YOU, Guangrui, Shenzhen, Guangdong 518129 (CN); LU, Xuefeng, Shenzhen, Guangdong 518129 (CN); CHEN, Feifei, Shenzhen, Guangdong 518129 (CN)
(74) Representative: Grünecker Patent- und Rechtsanwälte PartG mbB
(86) International application number: PCT/CN2019/078286
(87) International publication number: WO 2019/184727

(57) **Abstract**

A service upgrade management method, an apparatus, and a storage medium are provided. The method includes: creating a gray release policy and a gray traffic distribution rule; controlling a gray traffic distribution status; delivering the gray release policy, the gray traffic distribution rule, and the gray traffic distribution status to a gray traffic distribution device, where the gray release policy, the gray traffic distribution rule, and the gray traffic distribution status are used by the gray traffic distribution device to control a flow direction of a service message. With this solution, smooth service traffic switchover and hitless upgrade can be implemented without deploying an additional test environment or backup environment specially for testing stability before release.

## Description

This application claims priority to Chinese Patent Application No. 201810253849.8, filed with China National Intellectual Property Administration on March 26, 2018 and entitled "SERVICE UPGRADE MANAGEMENT METHOD, APPARATUS, AND STORAGE MEDIUM", which is incorporated herein by reference in its entirety.

### TECHNICAL FIELD

This application relates to the field of gray release technologies, and in particular, to a service upgrade management method, a gray release control platform, a gray traffic distribution device, and a storage medium.

### BACKGROUND

Gray release is a release manner in which a smooth transition between black and white can be implemented. An AB test is a gray release manner in which some users are enabled to continue to use A while the other users start to use B, and if the users have no objection to B, the scope is gradually expanded such that all users are migrated to B. The gray release ensures stability of an entire system. During the initial gray release, problems can be discovered and adjusted to minimize the degree of impact of the gray release.

A production environment and a test environment are applied to devices on an existing network, front-end traffic distribution devices are used to control traffic distribution, and after a system of a new version goes online, the system controls traffic distribution policies of the traffic distribution devices to distribute service messages to the test environment for trial running. If the running is normal, an upgrade is successful. Otherwise, the service messages are distributed to the original production environment.

### SUMMARY

This application provides a service upgrade management method, an apparatus, and a storage medium, to resolve a prior-art problem that a system environment needs to be additionally deployed and excessive resources are occupied.

A first aspect of this application provides a service upgrade management method, where the method is applied to a gray release control platform and includes:creating a gray release policy and a gray traffic distribution rule;
controlling a gray traffic distribution status; and
delivering the gray release policy, the gray traffic distribution rule, and the gray traffic distribution status to a gray traffic distribution device, where
the gray release policy, the gray traffic distribution rule, and the gray traffic distribution status are used by the gray traffic distribution device to control a flow direction of a service message.

In this embodiment of this application, the gray release control platform delivers the gray release policy, the gray traffic distribution rule, and the gray traffic distribution status to the gray traffic distribution device, so that the gray traffic distribution device can accurately control the flow direction of the service message, and stability of a carrier software application system can be ensured. A gray upgrade capability of a VNF can be implemented and smooth service traffic switchover and hitless upgrade can be ensured without deploying an additional test environment or backup environment specially for testing stability before release, and upgrade risks are reduced and software reliability is improved through trial and error, without significantly increasing additional virtual machine resources.

In some implementations, the gray traffic distribution status includes an initial state, an end state, a traffic-distribution-by-whitelist state, and a traffic-distribution-by-proportion state, and the gray release policy may include a whitelist policy, for example, the whitelist policy is a whitelist list, where the whitelist list is strongly correlated to a service, and a whitelist in the whitelist list may be a user identifier, a device identifier, a network address of a device, or the like. The gray traffic distribution status is classified, so that the gray traffic distribution device can quickly and accurately find a corresponding traffic distribution manner for controlling a flow direction of a service message, and further efficiently and accurately distribute, to a corresponding service instance, service messages that meet the gray release policy and that do not meet the gray release policy, and the service messages are smoothly migrated to a service instance of a new version.

In some implementations, the gray traffic distribution status may correspond to behavior logic of the gray traffic distribution device, in other words, may correspond to a traffic distribution manner for controlling a flow direction of a service message.

In some implementations, before the delivering the gray release policy, the gray traffic distribution rule, and the gray traffic distribution status to a gray traffic distribution device, the method further includes:
deploying a service instance of a second version for a service on which gray release is to be performed; and
respectively adding first label information to a service instance of a first version and adding second label information to the service instance of the second version, where both the first label information and the second label information are used by the gray traffic distribution device to determine an identifier of an object to which the service message is sent, and the version of the service instance of the second version is higher than that of the service instance of the first version.

In some possible implementations, the method further includes:
adjusting a traffic distribution proportion, where the traffic distribution proportion means a proportion of a quantity of service instances of the first version to which the service message is distributed to a quantity of service instances of the second version to which the service message is distributed.

In some implementations, the adjusting a traffic distribution proportion includes:
performing scale-in on the service instance of the first version, to release a virtual machine resource occupied by the service instance of the first version obtained after the scale-in, and performing scale-out on the service instance of the second version, where the service instance of the second version obtained after the scale-out occupies the released virtual machine resource; and
calculating the traffic distribution proportion based on the quantity of the service instances of the first version obtained after the scale-in, the quantity of the service instances of the second version obtained after the scale-out, and a maximum traffic distribution proportion of a current gray release task.

The method further includes:
sending the traffic distribution proportion to the gray traffic distribution device.

In some implementations, the service message includes a specific field, and before the service message is sent, the method further includes:
establishing a matching relationship between a whitelist and the specific field in the service message; and
sending the matching relationship to the gray traffic distribution device.

A second aspect of this application provides a service upgrade management method, where the method is applied to a gray traffic distribution device and includes:
receiving a gray release policy, a gray traffic distribution rule, and a gray traffic distribution status from a gray release control platform;
determining a traffic distribution mode based on the gray traffic distribution status; and
controlling a flow direction of a service message according to the determined traffic distribution mode, the gray release policy, the gray traffic distribution rule, and the gray traffic distribution status.

In some implementations, the gray traffic distribution status includes an initial state, an end state, a traffic-distribution-by-whitelist state, and a traffic-distribution-by-proportion state.

In some implementations, the controlling a flow direction of traffic of a service message according to the determined traffic distribution mode, the gray release policy, the gray traffic distribution rule, and the gray traffic distribution status includes one of the following implementations:
when the gray traffic distribution status is the initial state, distributing the traffic of the service message in a service instance of a first version in a polling manner; or
when the gray traffic distribution status is the end state, distributing the traffic of the service message in a polling manner; or
when the gray traffic distribution status is the traffic-distribution-by-whitelist state, distributing, to a service instance of a second version according to the gray release policy, a service message that conforms to the gray release policy, and distributing, in a service instance of a first version in a polling manner, a service message that does not conform to the gray release policy; or
when the gray traffic distribution status is the traffic-distribution-by-proportion state, distributing, to a service instance of a second version according to the gray release policy, a service message that conforms to the gray release policy, and distributing, in a service instance of a first version or the service instance of the second version in a polling manner, a service message that does not conform to the gray release policy.

In some implementations, the gray release policy includes a whitelist policy, and the distributing, to a service instance of a second version according to the gray release policy, a service message that conforms to the gray release policy includes:
obtaining a specific field in the service message;
matching the specific field with the whitelist policy; and
when the specific field is found based on a matching relationship between a specific field and a whitelist, determining that the service message meets a condition for distributing the service message to the service instance of the second version, and distributing the service message to the service instance of the second version; or
when the specific field is not found based on the matching relationship between a specific field and a whitelist, determining that the service message does not meet the condition for distributing the service message to the service instance of the second version, and distributing the service message to the service instance of the first version.

In some possible implementations, the method further includes:
receiving a traffic distribution proportion from the gray release control platform, where the traffic distribution proportion means a proportion of a quantity of service instances of a first version to which the service message is distributed to a quantity of service instances of a second version to which the service message is distributed;
distributing the service message to the service instance of the second version based on the traffic distribution proportion; and
receiving an updated traffic distribution proportion from the gray release control platform, and controlling the flow direction of the service message based on the updated traffic distribution proportion until all service messages are distributed to the service instance of the second version.

In some implementations, the gray traffic distribution device is integrated into a service instance in a form of a software development kit SDK.

A third aspect of this application provides a gray release control platform, which has a function of implementing the service upgrade management method provided in the first aspect. The function may be implemented by using hardware, or may be implemented by hardware by executing corresponding software. The hardware or the software includes one or more modules corresponding to the foregoing function, and the module may be software and/or hardware. In an implementation, the gray release control platform includes:
a processing module, configured to: create a gray release policy and a gray traffic distribution rule, and
control a gray traffic distribution status; and
a transceiver module, configured to deliver the gray release policy, the gray traffic distribution rule, and the gray traffic distribution status to a gray traffic distribution device, where
the gray release policy, the gray traffic distribution rule, and the gray traffic distribution status are used by the gray traffic distribution device to control a flow direction of a service message.

In some implementations, the gray traffic distribution status includes an initial state, an end state, a traffic-distribution-by-whitelist state, and a traffic-distribution-by-proportion state.

In some implementations, before the transceiver module delivers the gray release policy, the gray traffic distribution rule, and the gray traffic distribution status to a gray traffic distribution device, the processing module is further configured to:
deploy a service instance of a second version for a service on which gray release is to be performed; and
respectively add first label information to a service instance of a first version and add second label information to the service instance of the second version, where both the first label information and the second label information are used by the gray traffic distribution device to determine an identifier of an object to which the service message is sent, and the version of the service instance of the second version is higher than that of the service instance of the first version.

In some implementations, the processing module is further configured to:
adjust a traffic distribution proportion, where the traffic distribution proportion means a proportion of a quantity of service instances of the first version to which the service message is distributed to a quantity of service instances of the second version to which the service message is distributed.

In some implementations, the processing module is configured to:
perform scale-in on the service instance of the first version, to release a virtual machine resource occupied by the service instance of the first version obtained after the scale-in; and perform scale-out on the service instance of the second version, where the service instance of the second version obtained after the scale-out occupies the released virtual machine resource;
calculate the traffic distribution proportion based on the quantity of the service instances of the first version obtained after the scale-in, the quantity of the service instances of the second version obtained after the scale-out, and a maximum traffic distribution proportion of a current gray release task; and
send the traffic distribution proportion to the gray traffic distribution device by using the transceiver module.

A fourth aspect of this application provides a gray traffic distribution device, which has a function of implementing the service upgrade management method provided in the second aspect. The function may be implemented by using hardware, or may be implemented by hardware by executing corresponding software. The hardware or the software includes one or more modules corresponding to the foregoing function, and the module may be software and/or hardware.

In an implementation, the gray traffic distribution device includes:
a transceiver module, configured to receive a gray release policy, a gray traffic distribution rule, and a gray traffic distribution status from a gray release control platform; and
a processing module, configured to control a flow direction of a service message according to the gray release policy, the gray traffic distribution rule, and the gray traffic distribution status.

In some implementations, the gray traffic distribution status includes an initial state, an end state, a traffic-distribution-by-whitelist state, and a traffic-distribution-by-proportion state.

In some implementations, the processing module is configured to perform at least one of the following operations:
when the gray traffic distribution status is the initial state, distributing the traffic of the service message in a service instance of a first version in a polling manner; or
when the gray traffic distribution status is the end state, distributing the traffic of the service message in a polling manner; or
when the gray traffic distribution status is the traffic-distribution-by-whitelist state, distributing, to a service instance of a second version according to the gray release policy, a service message that conforms to the gray release policy, and distributing, in a service instance of a first version in a polling manner, a service message that does not conform to the gray release policy; or
when the gray traffic distribution status is the traffic-distribution-by-proportion state, distributing, to a service instance of a second version according to the gray release policy, a service message that conforms to the gray release policy, and distributing, in a service instance of a first version or the service instance of the second version in a polling manner, a service message that does not conform to the gray release policy.

In some implementations, the gray release policy includes a whitelist policy, and the processing module is specifically configured to:
obtain a specific field in the service message by using the transceiver module;
matching the specific field with the whitelist policy; and
when the specific field is found based on a matching relationship between a specific field and a whitelist, determine that the service message meets a condition for distributing the service message to the service instance of the second version, and distribute the service message to the service instance of the second version; or
when the specific field is not found based on the matching relationship between a specific field and a whitelist, determine that the service message does not meet the condition for distributing the service message to the service instance of the second version, and distribute the service message to the service instance of the first version.

In some implementations, the transceiver module is further configured to:
receive a traffic distribution proportion from the gray release control platform, where the traffic distribution proportion means a proportion of a quantity of service instances of the first version to which the service message is distributed to a quantity of service instances of the second version to which the service message is distributed;
distribute the service messages to the service instance of the second version based on the traffic distribution proportion; and
receive an updated traffic distribution proportion from the gray release control platform, and control the flow directions of the service messages based on the updated traffic distribution proportion until all the service messages are distributed to the service instance of the second version.

Another aspect of this application provides a computer apparatus, including at least one connected processor, memory, and transceiver, where the memory is configured to store program code, and the processor is configured to invoke the program code in the memory to perform the methods in the foregoing aspects.

Still another aspect of this application provides a computer storage medium, including an instruction. When the instruction runs on a computer, the computer is enabled to perform the operations in the first aspect or perform the operations in the second aspect.

Yet another aspect of this application provides a computer program product including an instruction. When the instruction runs on a computer, the computer is enabled to perform the operations in the first aspect or perform the operations in the second aspect.

### BRIEF DESCRIPTION OF DRAWINGS

FIG. 1 is a schematic diagram of an architecture of a carrier software application system according to an embodiment of this application;
FIG. 2 is a schematic flowchart of a service upgrade management method according to an embodiment of this application;
FIG. 3 is a schematic flowchart of distributing a service message based on a gray traffic distribution status according to an embodiment of this application;
FIG. 4A and FIG. 4B are a schematic flowchart of a service upgrade management method according to an embodiment of this application;
FIG. 5 is a schematic diagram of a structure of a gray release control platform according to an embodiment of this application;
FIG. 6 is a schematic diagram of a structure of a gray traffic distribution device according to an embodiment of this application; and
FIG. 7 is a schematic diagram of a structure of an apparatus for performing a service upgrade management method according to an embodiment of this application.

### DESCRIPTION OF EMBODIMENTS

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. In addition, the terms "include", "have", or any other variant thereof are intended to cover non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. The module division in this application is merely logical division, and there may be another division during implementation in actual application. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electronic or another form, and this is not limited in this application. In addition, modules or sub-modules described as separate components may be or may not be physically separated, or may be or may not be physical modules, or may not be grouped into multiple circuit modules. Objectives of the solutions of this application may be achieved by selecting some or all of the modules according to actual requirements.

This application provides a service upgrade management method, an apparatus, and a storage medium, which are used for gray release in a carrier software application system, for example, in scenarios such as an upgrade operation, a patch operation, and a configuration operation of the carrier software application system. Detailed descriptions are provided below.

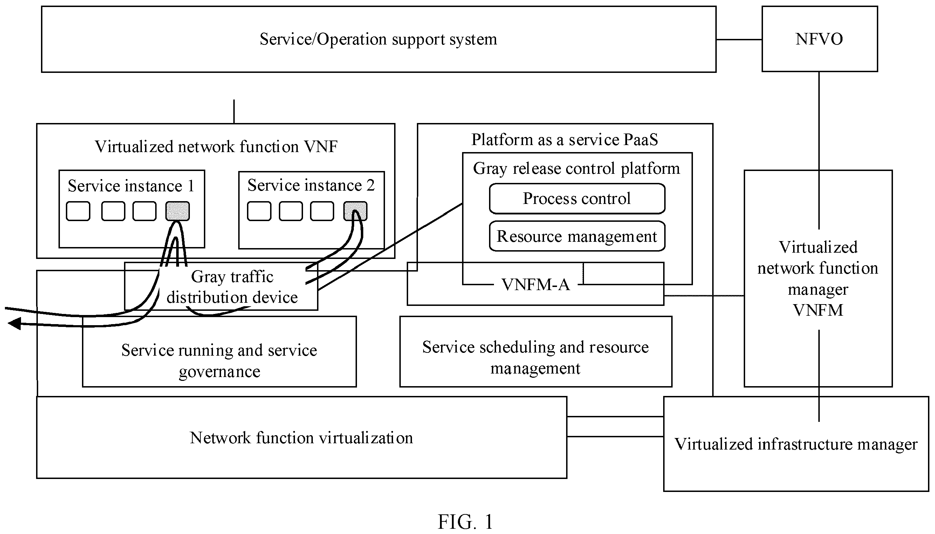

A carrier software application system shown in FIG. 1 includes a virtualized network function (Virtualized Network Function, VNF), a virtualized network function manager (Virtualized Network Function Manager, VNFM), a VNFM-A, network function virtualization (Network Function Virtualization, NFV), a platform as a service (platform as a service, PaaS), a virtualized infrastructure manager (Virtualized Infrastructure Manager, VIM), and a service/operation support system. The following describes functions of functional parts in the system shown in FIG. 1.

The VNF is configured to manage a service instance and a gray release process, for example, managing a service instance 1 and a service instance 2.

The PaaS means providing a software research and development platform as a service for use by users. A service-oriented architecture is an architecture method that splits a large-scale complex software application into one or more service instance parts. Service instances in the system can be independently autonomous and the service instances are loosely coupled to each other. Each service instance focuses on completing only one task and completes the task well. In the embodiment of this application, a gray release control platform, a gray traffic distribution device, and the VNFM-A are deployed in the PaaS.

The gray release control platform is used for process control and policy management. In other words, the gray release control platform is responsible for bringing a service instance of a new version online, storing and managing a gray release policy, and delivering the gray release policy to the gray traffic distribution device synchronously according to a gray release process. The gray release control platform interacts with the PaaS to deploy the service instance of the new version for a service on which gray release is performed and invoke a service registration center interface to add label information to the service instance. The label information is used by a gray traffic distribution LB to determine an identifier of an object to which the service message is sent. The gray release control platform synchronizes the gray release policy to the gray traffic distribution device.

The gray traffic distribution device is configured to perform traffic distribution management on service messages. For example, the gray traffic distribution device may control flow directions of service messages according to information such as a gray release policy, gray traffic distribution rule metadata, and a gray traffic distribution status that are received from the gray release control platform. For example, according to a whitelist policy, a part of traffic of service messages is distributed to an instance of a higher version.

The VNFM-A interconnects with the VNFM, is responsible for managing virtual machine resources required in a gray release process, and is mainly responsible for applying for and releasing virtual machine resources in a gray release process.

In the embodiment of this application, the gray traffic distribution device may be independently deployed, or may be integrated into a service instance in a form of a software development kit (Software Development Kit, SDK), in other words, each service instance is integrated with one small gray traffic distribution device. When there are a large quantity of service types in a carrier software application system, a management load on the gray release control platform is increased. Because SDK code for traffic distribution in a service instance and the service are deployed in a same process, the gray traffic distribution device may parse an RPC-type interface contract file between services. Therefore, message distribution for both an RPC interface type and a RESTful interface type are supported. In a mode in which the gray traffic distribution device is independently deployed, only gray traffic distribution for the RESTful interface type is supported. In a scenario in which the gray traffic distribution device is deployed in an independent process, gray traffic distribution can also be performed for a third-party software system.

To resolve the foregoing technical problem, this application mainly provides the following technical solutions:

In a PaaS-based carrier software application system architecture, the "gray release control platform", "gray traffic distribution device", and "VNFM_A" common services are added. The gray release control platform controls life cycle management of service instances of higher and lower versions of an upgraded service, controls a traffic distribution status and a policy change of the gray traffic distribution device, and controls interaction between a VNFM_A service and the VNFM to complete application and release of virtual machine resources during a gray upgrade. The gray traffic distribution device completes traffic distribution tasks of service messages according to a gray release policy and a traffic distribution status. At the beginning of the upgrade, the VNFM A applies for virtual machine resources of a corresponding type based on a type of an upgraded service and is responsible for releasing virtual machine resources after gray release is ended.

The gray release control platform automatically calculates a quantity of service instances of the new and old versions based on a whitelist and a traffic distribution proportion, a PaaS interface is invoked to perform a scale-out operation and a scale-in operation on the service instances of the new and old versions, and the gray traffic distribution device distributes service messages based on the quantity of service instances and the traffic distribution proportion.

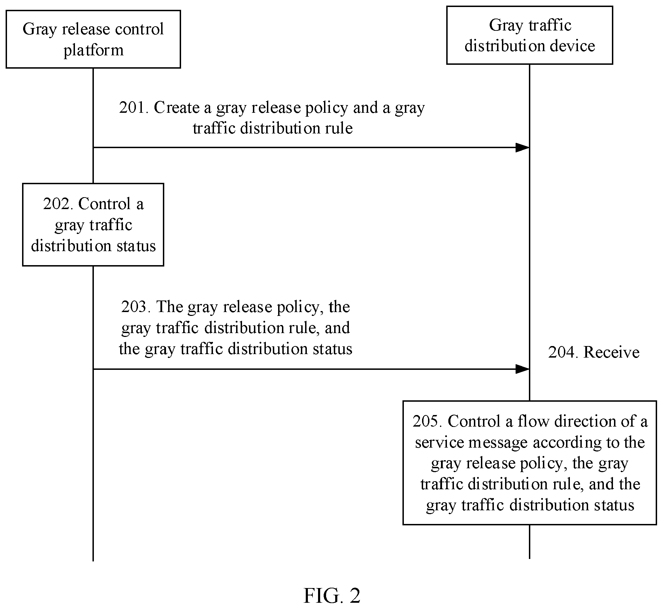

Referring to FIG. 2, the following describes a service upgrade management method provided in this application. The method includes the following steps.

201. A gray release control platform creates a gray release policy and a gray traffic distribution rule.

In some implementations, the gray release policy may include a whitelist policy, for example, a whitelist list, where the whitelist list is strongly correlated to a service, and a whitelist in the whitelist list may be a user identifier, a device identifier, a device network address, or the like.

202. The gray release control platform controls a gray traffic distribution status.

In some implementations, the gray traffic distribution status includes: an end state, an initial state, a traffic-distribution-by-whitelist state, and a traffic-distribution-by-proportion state. The gray traffic distribution status may correspond to behavior logic of a gray traffic distribution device, that is, may correspond to a traffic distribution manner for controlling flow directions of service messages. For the meaning of the gray traffic distribution status, and a correspondence between the gray traffic distribution status and the behavior logic of the gray traffic distribution device, refer to Table 1 below.

**Table 1**

| | |
|---|---|
| Gray traffic distribution status | Behavior logic of the gray traffic distribution device |
| End state | All service messages are distributed to all service instances in a polling manner. |
| Initial state | All service messages are distributed only to a service instance of a first version in a polling manner. |
| Traffic-di stribution-by-whitelist state | Service messages that match the whitelist policy are distributed to a service instance of a second version in a polling manner; and |
| | service messages that do not match the whitelist policy are distributed to the service instance of the first version in a polling manner. |
| Traffic-di stribution-by-proportion state | Service messages that match the whitelist policy are distributed to the service instance of the second version in a polling manner; and |
| | service messages that do not match the whitelist policy are distributed to both the service instance of the first version and the second version through polling traffic distribution. |

Table 1 discloses corresponding behavior logic of the gray traffic distribution device in each gray traffic distribution status, where the behavior logic of the gray traffic distribution device means a traffic distribution manner in which the gray traffic distribution device controls flow directions of service messages. For example, when the gray traffic distribution status is the traffic-distribution-by-whitelist state, the gray traffic distribution device may distribute, in a polling manner, service messages in the whitelist list to a service instance of a new version, and distribute, to a service instance of an old version in a polling manner, service messages that are not in the whitelist list. It can be learned that the gray traffic distribution status is classified, so that the gray traffic distribution device can quickly and accurately find a corresponding traffic distribution manner for controlling the flow directions of the service messages, and further efficiently and accurately distribute, to a corresponding service instance, service messages that meet the gray release policy and that do not meet the gray release policy, and further, the service messages are gradually migrated smoothly to the service instance of the new version.

203. The gray release control platform delivers the gray release policy, the gray traffic distribution rule, and the gray traffic distribution status to a gray traffic distribution device.

The gray release policy, the gray traffic distribution rule, and the gray traffic distribution status are used by the gray traffic distribution device to control flow directions of service messages.

To implement processing logic of the gray traffic distribution device, specific whitelist types, and service messages, the gray release control platform defines a matching relationship between a specific field in a service message and a whitelist through a configuration file. Code required for specific definition is as follows:

```
           <?xml version=" 1.0" encoding="utf-8"?>
           <ROOT>
               <VNFType>PCRF</SiteType>
               <Version>V100R018C10</Version>
               <SERVICE name="PMS">
                   <InterfaceRuleList>
                  <Interface type="rpc" schema="policymanager" name="query"
 grayfield="ipaddress"/>
                  <Interface type="rest" schema="body" name="\rest\query"
 grayfield="id"/>
                   </InterfaceRuleList>
               </SERVICE>
           </ROOT>
```

204. The gray traffic distribution device receives the gray release policy, the gray traffic distribution rule, and the gray traffic distribution status from the gray release control platform.

205. The gray traffic distribution device controls flow directions of service messages according to the gray release policy, the gray traffic distribution rule, and the gray traffic distribution status.

Compared with an existing mechanism, in this embodiment of this application, the gray release control platform delivers the gray release policy, the gray traffic distribution rule, and the gray traffic distribution status to the gray traffic distribution device, so that the gray traffic distribution device can accurately control the flow directions of the service messages, and stability of a carrier software application system can be ensured. A gray upgrade capability of a VNF can be implemented and smooth service traffic switchover and hitless upgrade can be ensured without deploying an additional test environment or backup environment specially for testing stability before release, and upgrade risks are reduced and software reliability is improved through trial and error, without significantly increasing additional virtual machine resources.

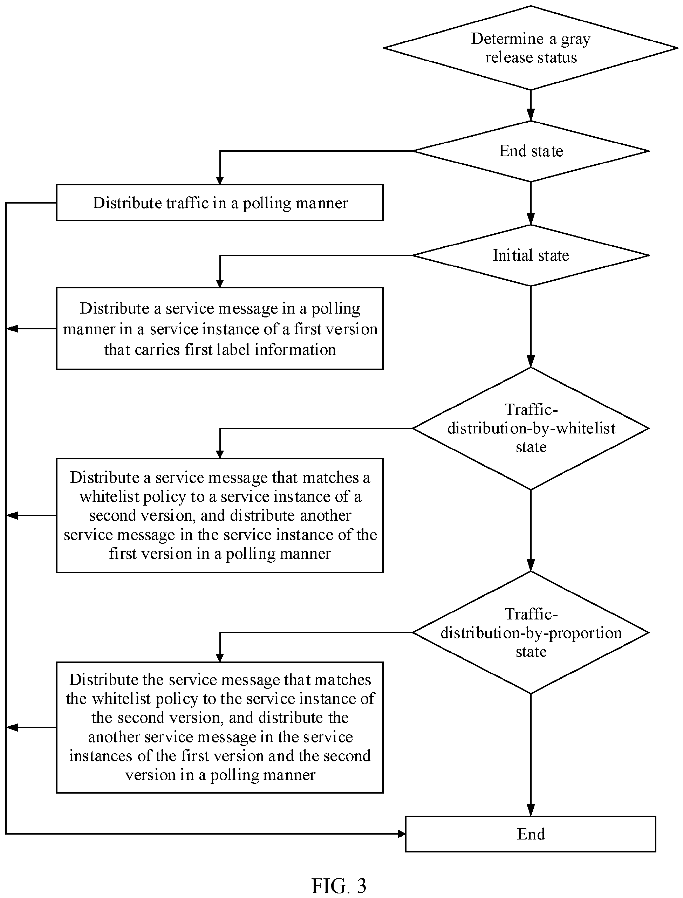

In some implementations, for example, as shown in FIG. 3, when controlling the flow directions of traffic of the service messages, the gray traffic distribution device may determine a traffic distribution manner based on a currently determined gray traffic distribution status, and then control the flow directions of the traffic of the service messages based on the determined traffic distribution manner, which may specifically include at least one of the following implementations:

For example, when the gray traffic distribution status is the initial state, the traffic of the service messages is distributed in the service instance of the first version in a polling manner.

Alternatively, when the gray traffic distribution status is the end state, the traffic of the service messages is distributed in a polling manner.

Alternatively, when the gray traffic distribution status is the traffic-distribution-by-whitelist state, service messages that conform to the gray release policy are distributed to the service instance of the second version according to the gray release policy, and service messages that do not conform to the gray release policy are distributed in the service instance of the first version in a polling manner. For example, service messages that match the whitelist policy are distributed to the service instance of the second version that carries second label information, and service messages that do not match the whitelist policy are distributed in the service instance of the first version in a polling manner.

Alternatively, when the gray traffic distribution status is the traffic-distribution-by-proportion state, service messages that conform to the gray release policy are distributed to the service instance of the second version according to the gray release policy; or service messages that do not conform to the gray release policy are distributed in the service instance of the first version or the service instance of the second version in a polling manner. For example, the service messages that match the whitelist policy are distributed to the service instance of the second version that carries the second label information, and the service messages that do not match the whitelist policy are distributed in the service instance of the first version in a polling manner, or the service messages that do not match the whitelist policy are distributed in the service instance of the second version in a polling manner.

It can be learned that, the gray traffic distribution status is classified, and the behavior logic corresponding to the gray traffic distribution device is preconfigured, so that the gray traffic distribution device can quickly and accurately find a corresponding traffic distribution manner for controlling flow directions of service messages, and further efficiently and accurately distribute, to a corresponding service instance, service messages that meet the gray release policy and that do not meet the gray release policy, and the service messages are gradually migrated smoothly to the service instance of the second version.

Optionally, in some embodiments of this application, the distributing, by the gray traffic distribution device to the service instance of the second version according to the gray release policy, service messages that conform to the gray release policy includes:
obtaining, by the gray traffic distribution device, a specific field in the service message, and matching the specific field with the whitelist policy. For example, if a device identifier included in the specific field in the service message can be found in the whitelist policy, it may be determined that the service message meets a condition for distributing the service message to the service instance of the second version.

In some implementations, the gray traffic distribution device may obtain a matching relationship between a specific field and a whitelist from the gray release control platform, and when the specific field is found based on the matching relationship between a specific field and a whitelist, the gray traffic distribution device determines that the service message meets the condition for distributing the service message to the service instance of the second version, so that the service message is distributed to the service instance of the second version.

When the specific field is not found based on the matching relationship between a specific field and a whitelist, the gray traffic distribution device determines that the service message does not meet the condition for distributing the service message to the service instance of the second version, and distributes the service message to the service instance of the first version. It can be learned that the service message that needs to be distributed to the service instance of the second version can be effectively identified based on the matching relationship.

Optionally, in some embodiments of this application, before the delivering, by the gray release control platform, the gray release policy, the gray traffic distribution rule, and the gray traffic distribution status to a gray traffic distribution device, the method further includes:
deploying, by the gray release control platform, the service instance of the second version for a service on which gray release is to be performed; and respectively adding first label information to the service instance of the first version and adding the second label information to the service instance of the second version, where both the first label information and the second label information are used by the gray traffic distribution device to determine an identifier of an object to which the service message is sent, and the version of the service instance of the second version is higher than that of the service instance of the first version.

For example, label information Low version is added to the service instance of the first version (for example, a service instance of a lower version), and label information High version is added to the service instance of the second version (for example, a service instance of a higher version).

Optionally, in some embodiments of the present invention of this application, the method further includes:
adjusting, by the gray release control platform, a traffic distribution proportion, where the traffic distribution proportion means a proportion of a quantity of service instances of the first version to which the service message is distributed to a quantity of service instances of the second version to which the service message is distributed. For example, if a previous traffic distribution proportion is 20%, a traffic distribution proportion of 50% can be delivered this time, which increases gradually.

In some implementations, the gray release control platform may adjust the traffic distribution proportion in the following manner:
performing, by the gray release control platform, scale-in on the service instance of the first version, to release a virtual machine resource occupied by the service instance of the first version obtained after the scale-in, and performing scale-out on the service instance of the second version, where the service instance of the second version obtained after the scale-out occupies the released virtual machine resource; and
calculating, by the gray release control platform, the traffic distribution proportion based on the quantity of the service instances of the first version obtained after the scale-in, the quantity of the service instances of the second version obtained after the scale-out, and a maximum traffic distribution proportion of a current gray release task; and sending the traffic distribution proportion to the gray traffic distribution device. The traffic distribution proportion means a proportion of a quantity of service instances of the first version to which the service message is distributed to a quantity of service instances of the second version to which the service message is distributed. In some implementations, the traffic distribution proportion may be processed based on the following logic:

A formula for calculating the traffic distribution proportion α is α = V2/(V1 + V2) > β? β: load balancing value.

β is the maximum traffic distribution proportion of tasks in a current batch, V1 is a quantity of service instances of a lower version on a service side, and V2 is a quantity of service instances of a higher version on the service side.

Correspondingly, the gray traffic distribution device receives the traffic distribution proportion from the gray release control platform, distribute the service messages to the service instance of the second version based on the traffic distribution proportion, receive an updated traffic distribution proportion from the gray release control platform, and control the flow directions of the service messages based on the updated traffic distribution proportion until all the service messages are distributed to the service instance of the second version. In this embodiment of this application, to implement smooth migration of service traffic, traffic of service messages distributed to the service instance of the second version may be gradually increased by dynamically adjusting the traffic distribution proportion for a plurality of times, for example, four traffic distribution proportions 10% -> 20% -> 50% -> 100% may be set to gradually complete an upgrade operation.

It can be learned that by dynamically adjusting the traffic distribution proportion in batches for a plurality of times, the traffic of the service messages distributed to the service instance of the second version can be increased, so that the service instance of the second version bears more services. In addition, in this application, adjustment of the traffic distribution proportion (for example, scale-in on the service instance of the first version and scale-out on the service instance of the second version) may be completed in a plurality of times. In this way, each time the traffic distribution proportion of the service messages is adjusted, no extra excessive redundant virtual machine resources are applied for, and the service traffic may also be gradually and smoothly migrated from the service instance of the second version to the service instance of the first version, to avoid a risk that an entire system may be faulty when quality of the service instance of the second version is unstable. In addition, the traffic of the service messages can be gradually migrated in batches to reduce the requirements for redundant virtual machine resources. This is especially applicable to a scenario in which a proportion of costs of virtual machine resources in a telecommunication device system is relatively high. In addition, service code in the carrier software application system is separated from basic platform code. The service code does not need to focus on details about gray release, and can support gray release without modifying open-source code and third-party service code.

After all service traffic is switched from the service instance of the first version to the service instance of the second version, and after the service traffic runs stably for a period of time, a user may end the gray release. After receiving an instruction sent by the user for ending the gray release, the gray release control platform performs some environment cleaning actions, where the environment cleaning actions include releasing redundant virtual machine resources, deleting redundant service packages of a lower version, and the like.

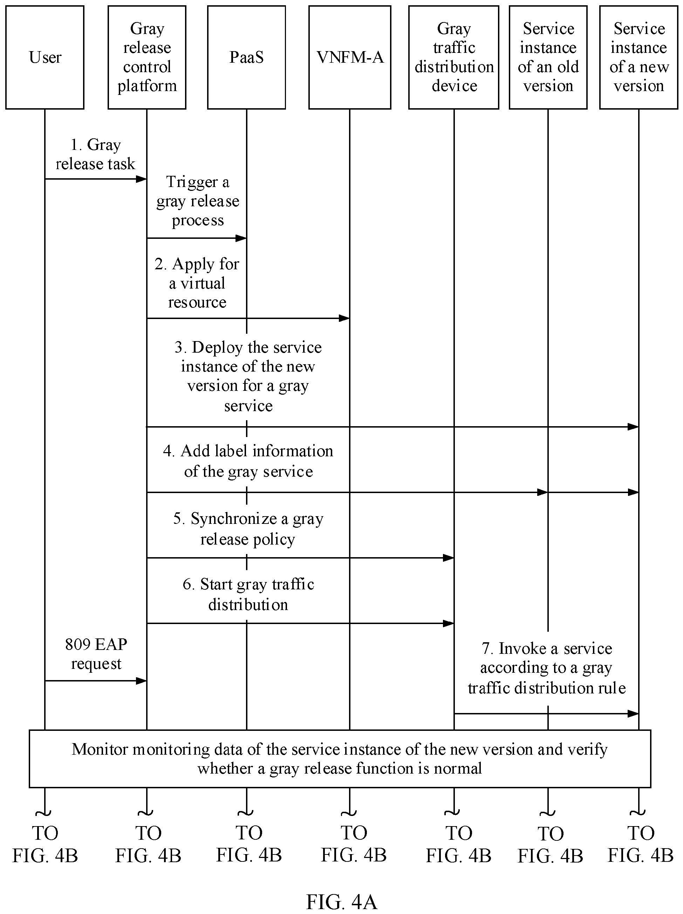

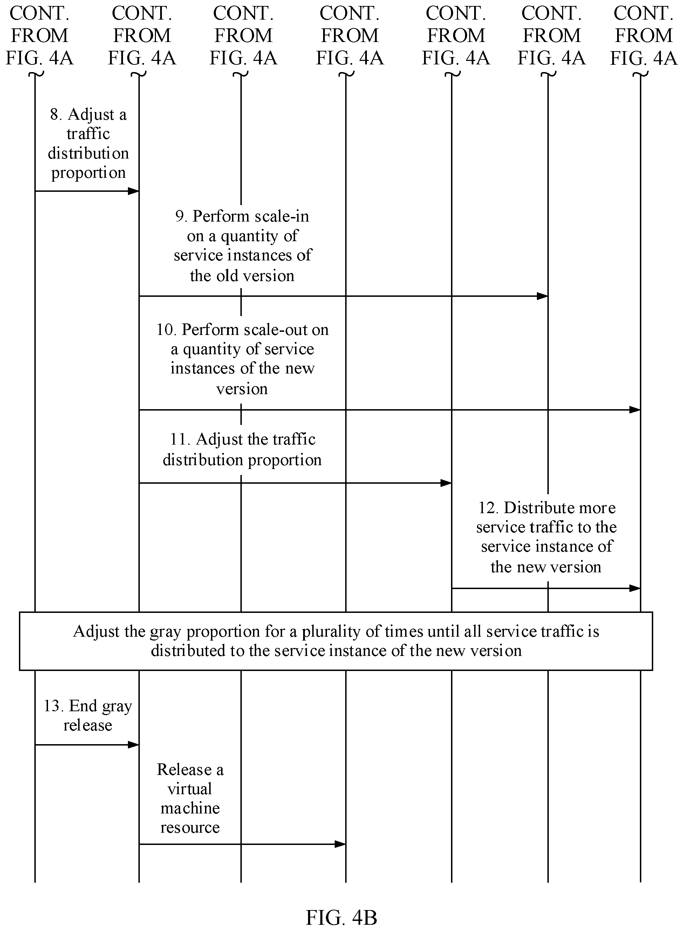

For ease of understanding, the following uses a specific application scenario as an example to describe the service upgrade management method in this application. As shown in FIG. 4A and FIG. 4B, this embodiment of this application includes the following steps:
Step 1: A user creates a gray release task on a gray upgrade interface, where the gray release task includes information such as a type of a service on which gray release is performed, a target version of the service, a whitelist list, and a gray release batch number. After the user enters related task information, and clicks for submission, the service on which the gray release is performed receives a request and stores the task information persistently. Then, the gray release task starts to be executed.
Step 2: Before the gray release task starts, virtual machine resources need to be applied for from a VNFM, where the virtual machine resources are used to deploy an instance of a new version for the service on which the gray release is performed. To apply for virtual machine resources, a VNFM_A needs to interact with the VNFM to apply for virtual machines.
Step 3: A gray release control platform interacts with a PaaS to deploy a service instance of the new version for the service on which the gray release is performed.
Step 4: The gray release control platform invokes a service registration center interface to respectively add label information to service instances of an old version and the new version. For example, label information labeled on a service side (of the old version) is old version, and label information labeled on a service side (of the new version) is new version, where the label information is used by a gray traffic distribution device to determine an identifier of an object to which the service message is sent.
Step 5: The gray release control platform synchronizes a gray release policy to the gray traffic distribution device.
Step 6: The gray release control platform delivers a command to a gray traffic distribution LB, to instruct the gray traffic distribution LB to start gray release.
Step 7: The gray traffic distribution device invokes a service according to a gray traffic distribution rule, for example, obtains a corresponding parameter through parsing from a specific field in a service message based on the currently received service message, and compares the parameter with a whitelist list; and if the parameter in the service message matches the whitelist list, needs to distribute the service message to the service instance of the new version, and otherwise, needs to distribute the service message to the service instance of the old version.
Step 8: The user may enable a service instance of a higher version to bear more services by increasing traffic distributed to the service instance of the new version, for example, delivering an instruction to adjust a traffic distribution proportion to the gray release control platform.
Step 9: After receiving an instruction to increase the gray traffic distribution proportion, the gray release control platform first invokes a PaaS interface to perform scale-in on the service instance of the old version. In this case, the service instance obtained after the scale-in automatically releases virtual machine resources.
Step 10: Then invoke the PaaS interface to perform scale-out on the service instance of the new version, where the new service instance obtained after the scale-out occupies the virtual machine resources released in step 9. It should be noted that scale-in and scale-out operations may be completed in a plurality of times, so that no extra excessive redundant virtual machine resources are applied for each time, and service traffic may be smoothly migrated between service instances of a higher version and a lower version.
Step 11: The gray release control platform sends the traffic distribution proportion to the gray traffic distribution device.
Step 12: The gray traffic distribution device distributes more service traffic to the service instance of the new version based on the traffic distribution proportion. In an entire upgrade process of an entire carrier software application system, the user needs to adjust the gray traffic distribution proportion for a plurality of times until all the service traffic is distributed to the service instance of the new version, so that migration can be smoothly completed for the service.
Step 13: After all the service traffic is switched to the service instance of the higher version and after the service traffic runs stably for a period of time, the user may send an instruction for ending the gray release to the gray release control platform. After receiving the instruction, the gray release control platform performs some environment cleaning actions, where the environment cleaning actions include releasing redundant virtual machine resources, deleting redundant service packages of an old version, and the like.

It can be learned that the gray traffic distribution device gradually migrates the service traffic from the service instance of the old version to the service instance of the new version according to a gray release policy such as a policy based on a whitelist and a policy based on a traffic distribution proportion, to avoid a risk that the entire carrier software application system may be faulty when software quality of a service instance of the new version is unstable. In addition, the traffic is gradually migrated in batches to reduce requirements for redundant virtual machine resources. This is especially applicable to a proportion of costs of virtual machine resources in the carrier software application system is relatively high.

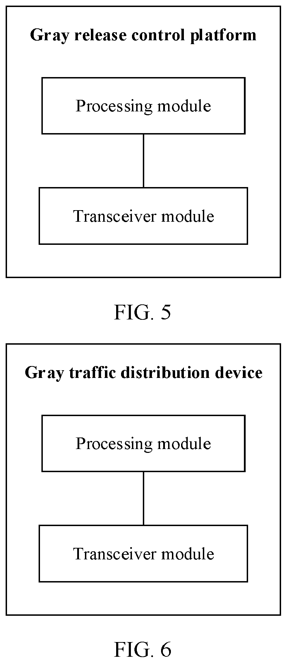

Any technical feature mentioned in any one of the embodiments described in FIG. 1 to FIG. 4B is also applicable to embodiments corresponding to FIG. 5 to FIG. 7 in this application. Similar content is not described below.

The foregoing describes the service upgrade management method in this application. The following separately describes a gray release control platform and a gray traffic distribution device that perform the foregoing service upgrade management method.

FIG. 5 is a schematic diagram of a structure of a gray release control platform. The gray release control platform in an embodiment of this application can implement steps of the service upgrade management method performed by the gray release control platform in the embodiment corresponding to any one of FIG. 2 to FIG. 4B. A function implemented by the gray release control platform may be implemented by using hardware, or may be implemented by hardware by executing corresponding software. The hardware or the software includes one or more modules corresponding to the foregoing function, and the module may be software and/or hardware. The gray release control platform may include a transceiver module and a processing module. For function implementation of the processing module, refer to various operations performed by the gray release control platform in the embodiment corresponding to any one of FIG. 2 to FIG. 4B. Details are not described herein again. For function implementation of the transceiver module, refer to various operations performed by the gray release control platform in the embodiment corresponding to any one of FIG. 2 to FIG. 4B. The processing module may be configured to control a receiving/transmitting operation of the transceiver module.

In some implementations, the processing module may be configured to: create a gray release policy and a gray traffic distribution rule, and control a gray traffic distribution status.

The transceiver module may be configured to deliver the gray release policy, the gray traffic distribution rule, and the gray traffic distribution status to a gray traffic distribution device, where
the gray release policy, the gray traffic distribution rule, and the gray traffic distribution status are used by the gray traffic distribution device to control flow directions of service messages.

In this embodiment of this application, the transceiver module in the gray release control platform delivers the gray release policy, the gray traffic distribution rule, and the gray traffic distribution status to the gray traffic distribution device, so that the gray traffic distribution device can accurately control the flow directions of the service messages, and stability of a carrier software application system can be ensured. A gray upgrade capability of a VNF can be implemented and smooth service traffic switchover and hitless upgrade can be ensured without deploying an additional test environment or backup environment specially for testing stability before release, and upgrade risks are reduced and software reliability is improved through trial and error, without significantly increasing additional virtual machine resources.

In some implementations, the gray traffic distribution status includes an initial state, an end state, a traffic-distribution-by-whitelist state, and a traffic-distribution-by-proportion state.

In some implementations, before the transceiver module delivers the gray release policy, the gray traffic distribution rule, and the gray traffic distribution status to a gray traffic distribution device, the processing module is further configured to:
deploy a service instance of a second version for a service on which gray release is to be performed; and
respectively add first label information to a service instance of a first version and add second label information to the service instance of the second version, where both the first label information and the second label information are used by the gray traffic distribution device to determine an identifier of an object to which the service message is sent, and the version of the service instance of the second version is higher than that of the service instance of the first version.

In some implementations, the processing module is further configured to:
adjust a traffic distribution proportion, where the traffic distribution proportion means a proportion of a quantity of service instances of the first version to which the service message is distributed to a quantity of service instances of the second version to which the service message is distributed.

In some implementations, the processing module is configured to:
perform scale-in on the service instance of the first version, to release a virtual machine resource occupied by the service instance of the first version obtained after the scale-in; and perform scale-out on the service instance of the second version, where the service instance of the second version obtained after the scale-out occupies the released virtual machine resource;
calculate the traffic distribution proportion based on the quantity of the service instances of the first version obtained after the scale-in, the quantity of the service instances of the second version obtained after the scale-out, and a maximum traffic distribution proportion of a current gray release task; and
send the traffic distribution proportion to the gray traffic distribution device by using the transceiver module.

FIG. 6 is a schematic diagram of a structure of a gray traffic distribution device. The gray traffic distribution device in an embodiment of this application can implement steps of the service upgrade management method performed by the gray traffic distribution device in the embodiment corresponding to any one of FIG. 2 to FIG. 4B. A function implemented by the gray traffic distribution device may be implemented by using hardware, or may be implemented by hardware by executing corresponding software. The hardware or the software includes one or more modules corresponding to the foregoing function, and the module may be software and/or hardware. The gray traffic distribution device may include a transceiver module and a processing module. For function implementation of the processing module, refer to various operations performed by the gray traffic distribution device in the embodiment corresponding to any one of FIG. 2 to FIG. 4B. Details are not described herein again. For function implementation of the transceiver module, refer to various operations performed by the gray traffic distribution device in the embodiment corresponding to any one of FIG. 2 to FIG. 4B. The processing module may be configured to control a receiving/transmitting operation of the transceiver module.

In some implementations, the transceiver module may be configured to receive a gray release policy, a gray traffic distribution rule, and a gray traffic distribution status from a gray release control platform; and
the processing module is configured to control flow directions of service messages according to the gray release policy, the gray traffic distribution rule, and the gray traffic distribution status.

In some implementations, the gray traffic distribution status includes an initial state, an end state, a traffic-distribution-by-whitelist state, and a traffic-distribution-by-proportion state.

In this embodiment of this application, after the transceiver module in the gray traffic distribution device obtains the gray release policy, the gray traffic distribution rule, and the gray traffic distribution status from the gray release control platform, the processing module in the gray traffic distribution device can accurately control the flow directions of the service messages, and stability of a carrier software application system can be ensured. A gray upgrade capability of a VNF can be implemented and smooth service traffic switchover and hitless upgrade can be ensured without deploying an additional test environment or backup environment specially for testing stability before release, and upgrade risks are reduced and software reliability is improved through trial and error, without significantly increasing additional virtual machine resources.

In some implementations, the processing module is configured to perform at least one of the following operations:
when the gray traffic distribution status is the initial state, distributing the traffic of the service messages in a service instance of a first version in a polling manner; or
when the gray traffic distribution status is the end state, distributing the traffic of the service messages in a polling manner; or
when the gray traffic distribution status is the traffic-distribution-by-whitelist state, distributing, to a service instance of a second version according to the gray release policy, service messages that conform to the gray release policy, and distributing, in a service instance of a first version in a polling manner, service messages that do not conform to the gray release policy; or
when the gray traffic distribution status is the traffic-distribution-by-proportion state, distributing, to a service instance of a second version according to the gray release policy, service messages that conform to the gray release policy, and distributing, in a service instance of a first version or the service instance of the second version in a polling manner, service messages that do not conform to the gray release policy.

In some implementations, the gray release policy includes a whitelist policy, and the processing module is specifically configured to:
obtain a specific field in the service message by using the transceiver module;
matching the specific field with the whitelist policy; and
when the specific field is found based on a matching relationship between a specific field and a whitelist, determine that the service message meets a condition for distributing the service message to the service instance of the second version, and distribute the service message to the service instance of the second version; or
when the specific field is not found based on the matching relationship between a specific field and a whitelist, determine that the service message does not meet the condition for distributing the service message to the service instance of the second version, and distribute the service message to the service instance of the first version.

In some implementations, the transceiver module is further configured to:
receive a traffic distribution proportion from the gray release control platform, where the traffic distribution proportion means a proportion of a quantity of service instances of the first version to which the service message is distributed to a quantity of service instances of the second version to which the service message is distributed;
distribute the service messages to the service instance of the second version based on the traffic distribution proportion; and
receive an updated traffic distribution proportion from the gray release control platform, and control the flow directions of the service messages based on the updated traffic distribution proportion until all the service messages are distributed to the service instance of the second version.

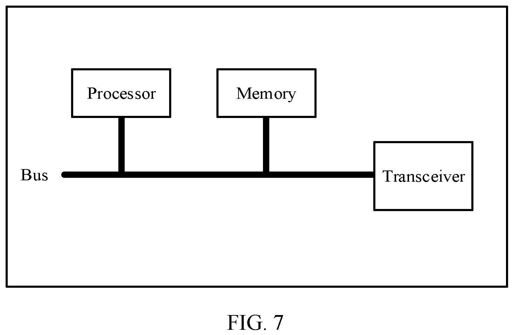

FIG. 7 is another schematic diagram of a structure of a gray release control platform or a gray traffic distribution device according to an embodiment of this application. The gray release control platform or the gray traffic distribution device may include at least one processor, at least one network interface or another communications interface, a memory, at least one communications bus, and at least one transceiver that is configured to implement connection and communication between these apparatuses. The processor is configured to execute an executable module such as a computer program stored in the memory. The memory may include a high-speed random access memory (English full name: Random Access Memory, RAM for short), or may further include a non-volatile memory (non-volatile memory), for example, at least one magnetic disk memory. The at least one network interface (which may be wired or wireless) is used to implement a communication connection between a system gateway and at least one other network element over the Internet, a wide area network, a local area network, a metropolitan area network, or the like.

As shown in FIG. 7, in some implementations, the memory stores a program instruction, and the program instruction may be executed by the processor. By invoking the program instruction stored in the memory, the processor specifically needs to invoke program code when performing the service upgrade management method in the embodiments of this application.

It should be noted that physical devices corresponding to all transceiver modules in the embodiments of this application (including the embodiments shown in FIG. 5 and FIG. 6) may be transceivers, and physical devices corresponding to all processing modules may be processors. The apparatuses shown in FIG. 5 and FIG. 6 may have a structure shown in FIG. 7. When an apparatus has the structure shown in FIG. 7, a processor and a transceiver in FIG. 7 implement functions that are the same as or similar to those of the processing module and the transceiver module provided in the foregoing apparatus embodiment corresponding to the apparatus, and a memory in FIG. 7 stores program code that needs to be invoked when the processor performs the foregoing service upgrade management method. The transceiver may also be replaced with a receiver and a transmitter, and may be a same physical entity or different physical entities. When the transceiver is a same physical entity, the transceiver may be collectively referred to as a transceiver. For example, the transceiver may be a radio frequency (English full name: Radio Frequency, RF for short) circuit. The memory may be integrated in the processor, or may be separated from the processor.

The methods disclosed in the foregoing embodiments of this application may be applied to the processor shown in FIG. 7, or may be implemented by the processor shown in FIG. 7. For example, in some implementations, the processor in FIG. 7 may invoke the program instruction stored in the memory, and the processor specifically needs to invoke program code when performing the service upgrade management method in the embodiments of this application.

For example, when the gray release control platform has the structure shown in FIG. 7, the memory in FIG. 7 stores the program code that needs to be invoked when the processor performs the foregoing service upgrade management method performed by the gray release control platform. Specifically, the processor in FIG. 7 can invoke the program code in the memory to perform the following operations:
creating a gray release policy and a gray traffic distribution rule;
controlling a gray traffic distribution status; and
delivering the gray release policy, the gray traffic distribution rule, and the gray traffic distribution status to a gray traffic distribution device by using the transceiver, where the gray release policy, the gray traffic distribution rule, and the gray traffic distribution status are used by the gray traffic distribution device to control flow directions of service messages.

For example, when the gray traffic distribution device has the structure shown in FIG. 7, the memory in FIG. 7 stores the program code that needs to be invoked when the processor performs the foregoing service upgrade management method performed by the gray traffic distribution device. Specifically, the processor in FIG. 7 can invoke the program code in the memory to perform the following operations:
receiving a gray release policy, a gray traffic distribution rule, and a gray traffic distribution status from a gray release control platform by using the transceiver; and
controlling flow directions of service messages according to the gray release policy, the gray traffic distribution rule, and the gray traffic distribution status.

In the foregoing embodiments, the description of each embodiment has respective focuses. For a part that is not described in detail in an embodiment, refer to related descriptions in other embodiments.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the embodiments.

In addition, functional modules in this application may be integrated into one processing module, or each of the modules may exist alone physically, or two or more modules are integrated into one module. The integrated module may be implemented in a form of hardware, or may be implemented in a form of a software functional module. When the integrated module is implemented in the form of a software functional module and sold or used as an independent product, the integrated unit may be stored in a computer-readable storage medium.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The technical solutions provided in this application are described in detail above. The principle and implementation of this application are described herein through specific examples. The description about the embodiments is merely provided to help understand the method and core ideas of this application. In addition, a person of ordinary skill in the art can make variations and modifications to this application in terms of the specific implementations and application scopes according to the ideas of this application. Therefore, the content of specification shall not be construed as a limit to this application.

## Claims

1. A service upgrade management method, applied to a gray release control platform, wherein the method comprises:
creating a gray release policy and a gray traffic distribution rule;
controlling a gray traffic distribution status; and
delivering the gray release policy, the gray traffic distribution rule, and the gray traffic distribution status to a gray traffic distribution device, wherein
the gray release policy, the gray traffic distribution rule, and the gray traffic distribution status are used by the gray traffic distribution device to control a flow direction of a service message.

2. The method according to claim 1, wherein the gray traffic distribution status comprises an initial state, an end state, a traffic-distribution-by-whitelist state, and a traffic-distribution-by-proportion state.

3. The method according to claim 1 or 2, wherein before the delivering the gray release policy, the gray traffic distribution rule, and the gray traffic distribution status to a gray traffic distribution device, the method further comprises:
deploying a service instance of a second version for a service on which gray release is to be performed; and
respectively adding first label information to a service instance of a first version and adding second label information to the service instance of the second version, wherein both the first label information and the second label information are used by the gray traffic distribution device to determine an identifier of an object to which the service message is sent, and the version of the service instance of the second version is higher than that of the service instance of the first version.

4. The method according to claim 3, wherein the method further comprises:
adjusting a traffic distribution proportion, wherein the traffic distribution proportion means a proportion of a quantity of service instances of the first version to which the service message is distributed to a quantity of service instances of the second version to which the service message is distributed.

5. The method according to claim 4, wherein the adjusting a traffic distribution proportion comprises:
performing scale-in on the service instance of the first version, to release a virtual machine resource occupied by the service instance of the first version obtained after the scale-in, and performing scale-out on the service instance of the second version, wherein the service instance of the second version obtained after the scale-out occupies the released virtual machine resource; and
calculating the traffic distribution proportion based on the quantity of the service instances of the first version obtained after the scale-in, the quantity of the service instances of the second version obtained after the scale-out, and a maximum traffic distribution proportion of a current gray release task; and
the method further comprises:
sending the traffic distribution proportion to the gray traffic distribution device.

6. The method according to any one of claims 1 to 5, wherein the service message comprises a specific field, and before the service message is sent, the method further comprises:
establishing a matching relationship between a whitelist and the specific field in the service message; and
sending the matching relationship to the gray traffic distribution device.

7. A service upgrade management method, applied to a gray traffic distribution device, wherein the method comprises:
receiving a gray release policy, a gray traffic distribution rule, and a gray traffic distribution status from a gray release control platform; and
controlling a flow direction of a service message according to the gray release policy, the gray traffic distribution rule, and the gray traffic distribution status.

8. The method according to claim 7, wherein the gray traffic distribution status comprises an initial state, an end state, a traffic-distribution-by-whitelist state, and a traffic-distribution-by-proportion state.

9. The method according to claim 8, wherein the controlling a flow direction of traffic of a service message according to the gray release policy, the gray traffic distribution rule, and the gray traffic distribution status comprises at least one of the following implementations:
when the gray traffic distribution status is the initial state, distributing the traffic of the service message in a service instance of a first version in a polling manner; or
when the gray traffic distribution status is the end state, distributing the traffic of the service message in a polling manner; or
when the gray traffic distribution status is the traffic-distribution-by-whitelist state, distributing, to a service instance of a second version according to the gray release policy, a service message that conforms to the gray release policy, and distributing, in a service instance of a first version in a polling manner, a service message that does not conform to the gray release policy; or
when the gray traffic distribution status is the traffic-distribution-by-proportion state, distributing, to a service instance of a second version according to the gray release policy, a service message that conforms to the gray release policy, and distributing, in a service instance of a first version or the service instance of the second version in a polling manner, a service message that does not conform to the gray release policy.

10. The method according to claim 9, wherein the gray release policy comprises a whitelist policy, and the distributing, to a service instance of a second version according to the gray release policy, a service message that conforms to the gray release policy comprises:
obtaining a specific field in the service message;
matching the specific field with the whitelist policy; and
when the specific field is found based on a matching relationship between a specific field and a whitelist, determining that the service message meets a condition for distributing the service message to the service instance of the second version, and distributing the service message to the service instance of the second version; or
when the specific field is not found based on the matching relationship between a specific field and a whitelist, determining that the service message does not meet the condition for distributing the service message to the service instance of the second version, and distributing the service message to the service instance of the first version.

11. The method according to claim 7, wherein the method further comprises:
receiving a traffic distribution proportion from the gray release control platform, wherein the traffic distribution proportion means a proportion of a quantity of service instances of a first version to which the service message is distributed to a quantity of service instances of a second version to which the service message is distributed;
distributing the service message to the service instance of the second version based on the traffic distribution proportion; and
receiving an updated traffic distribution proportion from the gray release control platform, and controlling the flow direction of the service message based on the updated traffic distribution proportion until all service messages are distributed to the service instance of the second version.

12. A gray release control platform, wherein the gray release control platform comprises:
a processing module, configured to create a gray release policy and a gray traffic distribution rule, and
control a gray traffic distribution status; and
a transceiver module, configured to deliver the gray release policy, the gray traffic distribution rule, and the gray traffic distribution status to a gray traffic distribution device, wherein
the gray release policy, the gray traffic distribution rule, and the gray traffic distribution status are used by the gray traffic distribution device to control a flow direction of a service message.

13. The gray release control platform according to claim 12, wherein the gray traffic distribution status comprises an initial state, an end state, a traffic-distribution-by-whitelist state, and a traffic-distribution-by-proportion state.

14. The gray release control platform according to claim 12 or 13, wherein before the transceiver module delivers the gray release policy, the gray traffic distribution rule, and the gray traffic distribution status to a gray traffic distribution device, the processing module is further configured to:
deploy a service instance of a second version for a service on which gray release is to be performed; and
respectively add first label information to a service instance of a first version and add second label information to the service instance of the second version, wherein both the first label information and the second label information are used by the gray traffic distribution device to determine an identifier of an object to which the service message is sent, and the version of the service instance of the second version is higher than that of the service instance of the first version.

15. The gray release control platform according to claim 14, wherein the processing module is further configured to:
adjust a traffic distribution proportion, wherein the traffic distribution proportion means a proportion of a quantity of service instances of the first version to which the service message is distributed to a quantity of service instances of the second version to which the service message is distributed.

16. The gray release control platform according to claim 15, wherein the processing module is configured to:
perform scale-in on the service instance of the first version, to release a virtual machine resource occupied by the service instance of the first version obtained after the scale-in, and perform scale-out on the service instance of the second version, wherein the service instance of the second version obtained after the scale-out occupies the released virtual machine resource; and
calculate the traffic distribution proportion based on the quantity of the service instances of the first version obtained after the scale-in, the quantity of the service instances of the second version obtained after the scale-out, and a maximum traffic distribution proportion of a current gray release task; and
send the traffic distribution proportion to the gray traffic distribution device by using the transceiver module.

17. A gray traffic distribution device, wherein the gray traffic distribution device comprises:
a transceiver module, configured to receive a gray release policy, a gray traffic distribution rule, and a gray traffic distribution status from a gray release control platform; and
a processing module, configured to control a flow direction of a service message according to the gray release policy, the gray traffic distribution rule, and the gray traffic distribution status.

18. The gray traffic distribution device according to claim 17, wherein the processing module is configured to perform at least one of the following operations:
when the gray traffic distribution status is the initial state, distributing traffic of the service message in a service instance of a first version in a polling manner; or
when the gray traffic distribution status is the end state, distributing the traffic of the service message in a polling manner; or
when the gray traffic distribution status is the traffic-distribution-by-whitelist state, distributing, to a service instance of a second version according to the gray release policy, a service message that conforms to the gray release policy, and distributing, in a service instance of a first version in a polling manner, a service message that does not conform to the gray release policy; or
when the gray traffic distribution status is the traffic-distribution-by-proportion state, distributing, to a service instance of a second version according to the gray release policy, a service message that conforms to the gray release policy, and distributing, in a service instance of a first version or the service instance of the second version in a polling manner, a service message that does not conform to the gray release policy.

19. The gray traffic distribution device according to claim 18, wherein the gray release policy comprises a whitelist policy, and the processing module is specifically configured to:
obtain a specific field in the service message by using the transceiver module;
match the specific field with the whitelist policy; and
when the specific field is found based on a matching relationship between a specific field and a whitelist, determine that the service message meets a condition for distributing the service message to the service instance of the second version, and distribute the service message to the service instance of the second version; or
when the specific field is not found based on the matching relationship between a specific field and a whitelist, determine that the service message does not meet the condition for distributing the service message to the service instance of the second version, and distribute the service message to the service instance of the first version.

20. The gray traffic distribution device according to claim 17, wherein the transceiver module is further configured to:
receive a traffic distribution proportion from the gray release control platform, wherein the traffic distribution proportion means a proportion of a quantity of service instances of a first version to which the service message is distributed to a quantity of service instances of a second version to which the service message is distributed;
distribute the service message to the service instance of the second version based on the traffic distribution proportion; and
receive an updated traffic distribution proportion from the gray release control platform, and control the flow direction of the service message based on the updated traffic distribution proportion until all service messages are distributed to the service instance of the second version.

21. A gray release control platform, wherein the gray release control platform comprises:
at least one processor, a memory, and a transceiver, wherein
the memory is configured to store program code, and the processor is configured to invoke the program code stored in the memory to perform the method according to any one of claims 1 to 6.

22. A gray traffic distribution device, wherein the gray traffic distribution device comprises:
at least one processor, a memory, and a transceiver, wherein
the memory is configured to store program code, and the processor is configured to invoke the program code stored in the memory to perform the method according to any one of claims 7 to 11.

23. A computer storage medium, comprising an instruction, wherein when the instruction is run on a computer, the computer is enabled to perform the method according to any one of claims 1 to 6, or to perform the method according to any one of claims 7 to 11.
